(19) **Europäisches Patentamt**
**European Patent Office**
**Office européen des brevets**

(11) **EP 4 131 065 B1**

(12) **EUROPEAN PATENT SPECIFICATION**

(45) Date of publication and mention
of the grant of the patent:
**31.12.2025 Bulletin 2026/01**

(21) Application number: **21796712.4**

(22) Date of filing: **20.04.2021**

(51) International Patent Classification (IPC):
***G06V 40/16*** *(2022.01)*   ***G06V 10/56*** *(2022.01)*
***G06V 10/60*** *(2022.01)*

(52) Cooperative Patent Classification (CPC):
**G06V 10/60; G06V 10/56; G06V 40/168;**
**G06V 40/171;** G06V 10/25

(86) International application number:
**PCT/CN2021/088275**

(87) International publication number:
**WO 2021/218696 (04.11.2021 Gazette 2021/44)**

(54) **SKIN COLOR DETECTION METHOD AND APPARATUS, TERMINAL AND STORAGE MEDIUM**

HAUTFARBENERKENNUNGSVERFAHREN UND -VORRICHTUNG, ENDGERÄT UND SPEICHERMEDIUM

PROCÉDÉ ET APPAREIL DE DÉTECTION DE COULEUR DE PEAU, TERMINAL ET SUPPORT DE STOCKAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **27.04.2020 CN 202010345814**

(43) Date of publication of application:
**08.02.2023 Bulletin 2023/06**

(73) Proprietors:
• **Huawei Technologies Co., Ltd.**
**Shenzhen, Guangdong 518129, (CN)**
• **Institute of Automation, Chinese Academy of**
**Sciences**
**Beijing 100190 (CN)**

(72) Inventors:
• **ZHOU, Yidan**
**Shenzhen, Guangdong 518129 (CN)**
• **LU, Yuewan**
**Shenzhen, Guangdong 518129 (CN)**
• **CHEN, Xiaotang**
**Beijing 100190 (CN)**
• **HUANG, Kaiqi**
**Beijing 100190 (CN)**
• **DONG, Chen**
**Shenzhen, Guangdong 518129 (CN)**

• **GAO, Wenmei**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
CN-A- 106 529 429    CN-A- 107 481 186
CN-A- 107 818 285    CN-A- 110 751 051
CN-A- 110 874 572    US-A1- 2015 237 351

• LEE JAE Y ET AL: "An Elliptical Boundary Model
for Skin Color Detection", 31 December 2002
(2002-12-31), XP093052819, Retrieved from the
Internet <URL:https://citeseerx.ist.psu.edu/
document?repid=rep1&type=pdf&
doi=8fc52587279da65b1ba60973c923
f2461a202d81> [retrieved on 20230608]
• JAIN JHILMIL ET AL: "Color match", 2
September 2008 (2008-09-02), New York, NY, US,
pages 331 - 334, XP055905157, ISBN:
978-1-59593-952-4, Retrieved from the Internet
<URL:https://dl.acm.org/doi/pdf/10.1145/
1409240.1409281> [retrieved on 20230612], DOI:
10.1145/1409240.1409281

**Description**

**TECHNICAL FIELD**

This application relates to the field of image processing technologies, and in particular, to a skin color detection method and apparatus, a terminal, and a storage medium.

**BACKGROUND**

With intelligent development of a terminal such as a mobile phone, the terminal can implement increasingly more functions. For example, skin health detection may be implemented by using a mobile phone, to further implement skin care. Currently, a skin detection manner implemented by using a mobile phone is based on processing of a shot image of a skin, to determine a skin color. However, there is a relatively large difference between a skin color detected by a terminal and a real skin color. Consequently, a detection result is inaccurate.

The document CN 110 874 572 A shows a system and method for recognizing skin color in images, and correcting the image brightness so as to avoid too bright or too dark illumination of faces.

The document Lee Jae Y et al: "An Elliptical Boundary Model for Skin Color Detection", XP93052819 shows mathematical models for detecting skin color.

The document Jain Jhilmil et al: "Color match", XP055905157 shows a system and method for automatic cosmetics advisory services based upon skin color detection.

**SUMMARY**

The present invention is defined by the independent claims. Further advantageous developments are shown by the dependent claims.

Technical solutions of this application provide a skin color detection method and apparatus, a terminal, and a storage medium, to improve accuracy of skin color detection.

According to a first aspect, an embodiment of this application provides a skin color detection method, including: obtaining a face image; determining a face key point in the face image; determining a skin color estimation region of interest and an illumination estimation region of interest in the face image based on the face key point; obtaining a detected skin color value corresponding to the skin color estimation region of interest; obtaining a detected illumination color value corresponding to the illumination estimation region of interest; and using the detected skin color value and the detected illumination color value as feature input of a skin color estimation model, and obtaining a corrected skin color value output by the skin color estimation model.

The scope of the invention is defined by the appended claims.

Optionally, the obtaining a detected skin color value corresponding to the skin color estimation region of interest includes: obtaining, through screening by using an elliptic skin color model, a pixel that is in the skin color estimation region of interest and that meets a preset condition; and calculating an average value of detected skin color values of the skin color estimation region of interest based on the pixel that is in the skin color estimation region of interest and that meets the preset condition, and using the average value as the detected skin color value corresponding to the skin color estimation region of interest.

Optionally, the obtaining a detected illumination color value corresponding to the illumination estimation region of interest is: obtaining the detected illumination color value corresponding to the illumination estimation region of interest by using Gaussian filtering and a shades of gray algorithm.

Optionally, the corrected skin color value output by the skin color estimation model includes an RGB color value or an LAB color value.

Optionally, the obtaining a corrected skin color value output by the skin color estimation model includes: obtaining an RGB color value output by the skin color estimation model. The skin color detection method further includes: converting the RGB color value output by the skin color estimation model into an HSV color value, and determining a skin color tone based on the HSV color value; and converting the RGB color value output by the skin color estimation model into an LAB color value, obtaining a corresponding individual typology angle ITA based on the LAB color value, and determining a skin color code based on the ITA.

Optionally, the obtaining a corrected skin color value output by the skin color estimation model includes: obtaining an RGB color value and an individual typology angle ITA that are output by the skin color estimation model. The skin color detection method further includes: converting the RGB color value output by the skin color estimation model into an HSV color value, and determining a skin color tone based on the HSV color value; and determining a skin color code based on the ITA output by the skin color estimation model.

Optionally, the skin color detection method further includes: generating a skin detection result interface, where the skin detection result interface includes a skin color bar, and the skin color bar includes the skin color code; and generating a skin color details interface in response to a selection instruction of the skin color bar, where the skin color details interface includes the skin color code, the skin color tone, and a skin care suggestion.

Optionally, before the obtaining a face image, the skin color detection method further includes: generating a skin detection interface, where the skin detection interface includes skin detection history information and a skin detection icon; and in response to a selection instruction of the skin detection icon, entering a process of obtaining the face image.

According to a second aspect, an embodiment of this application provides a skin color detection apparatus, including: an image obtaining module, configured to obtain a face image; a key point determining module, configured to determine a face key point in the face image; a region determining module, configured to determine a skin color estimation region of interest and an illumination estimation region of interest in the face image based on the face key point; a skin color detection module, configured to obtain a detected skin color value corresponding to the skin color estimation region of interest; an illumination detection module, configured to obtain a detected illumination color value corresponding to the illumination estimation region of interest; and a skin color correction module, configured to use the detected skin color value and the detected illumination color value as feature input of a skin color estimation model, and obtain a corrected skin color value output by the skin color estimation model.

According to a third aspect, an embodiment of this application provides a skin color detection apparatus, including a processor and a memory. The memory is configured to store at least one instruction, and when the instruction is loaded and executed by the processor, the foregoing skin color detection method is implemented.

According to a fourth aspect, an embodiment of this application provides a terminal, including the foregoing skin color detection apparatus.

According to a fifth aspect, an embodiment of this application provides a computer-readable storage medium. The computer-readable storage medium stores a computer program, and when the computer program is run on a computer, the computer is enabled to perform the foregoing skin color detection method.

According to the skin color detection method and apparatus, the terminal, and the storage medium in the embodiments of this application, the skin color estimation region of interest and the illumination estimation region of interest are determined based on the face key point, and detection is separately performed on the two regions to obtain the detected skin color value and the detected illumination color value. The two color values are used as the feature input of the skin color estimation model, to obtain the corrected skin color value output by the skin color estimation model. The skin color estimation model may be established in advance based on training data of different ambient light sources and different terminals. Therefore, the corrected skin color value output by the skin color estimation model is closer to a real skin color, impact on the skin color caused by different characteristics of camera photosensitive elements in the terminals and different ambient illumination is reduced, and accuracy of skin color detection is improved.

## BRIEF DESCRIPTION OF DRAWINGS

FIG. 1 is a flowchart of a skin color detection method according to an embodiment of this application;
FIG. 2 is a schematic diagram of a face key point according to an embodiment of this application;
FIG. 3 is a schematic diagram of a skin color estimation region of interest according to an embodiment of this application;
FIG. 4 is a schematic diagram of an illumination estimation region of interest according to an embodiment of this application;
FIG. 5 is a schematic diagram of elliptic distribution met by a skin color according to an embodiment of this application;
FIG. 6 is a schematic diagram of a status of a skin detection result interface according to an embodiment of this application;
FIG. 7 is a schematic diagram of a status of a skin color details interface according to an embodiment of this application;
FIG. 8 is a schematic diagram of a status of a skin detection interface according to an embodiment of this application; and
FIG. 9 is a schematic diagram of population distribution corresponding to different ITA threshold intervals according to an embodiment of this application.

## DESCRIPTION OF EMBODIMENTS

Terms used in embodiments of this application are only used to explain specific embodiments of this application, but are not intended to limit this application.

Before the embodiments of this application are described, a problem of a conventional technology is briefly described first. For a terminal such as a mobile phone, different models of cameras have different imaging qualities, and each photosensitive element of the mobile phone responds differently to illumination at different frequencies. When an external illumination environment changes, different white balance algorithms are triggered. As a result, photos shot by different mobile phones and in environments with different light intensity and color temperatures usually have a relatively large color cast. Consequently, accuracy of a skin color detection method in a current terminal is relatively poor. The following describes the embodiments of this application.

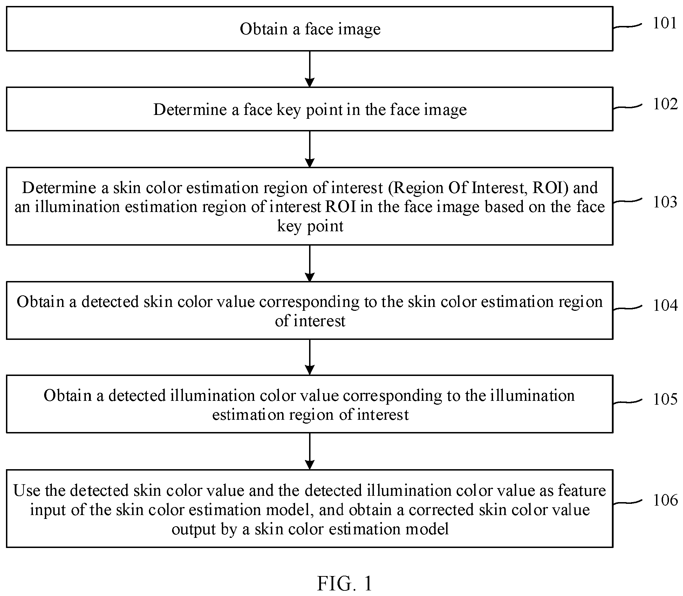

As shown in FIG. 1, FIG. 1 is a flowchart of a skin color detection method according to an embodiment of this application. An embodiment of this application provides a skin color detection method, including the following steps.

Step 101: Obtain a face image.

Step 102: Determine a face key point in the face image.

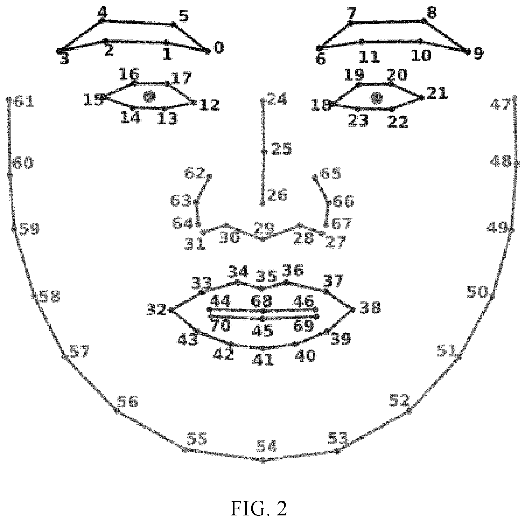

Specifically, as shown in FIG. 2, FIG. 2 is a schematic diagram of a face key point according to an embodiment of this application. FIG. 2 accurately feeds back locations of key points of facial features and contours in the image, and each number represents a key point. FIG. 2 shows 71 key points of a face. It should be noted that a quantity and locations of the key points in FIG. 2 are merely examples. A specific quantity and locations of the key points are related to a face detection library. The quantity and the locations of the key points of the face are not limited in this embodiment of this application.

Step 103: Determine a skin color estimation region of interest (Region Of Interest, ROI) and an illumination estimation region of interest ROI in the face image based on the face key point.

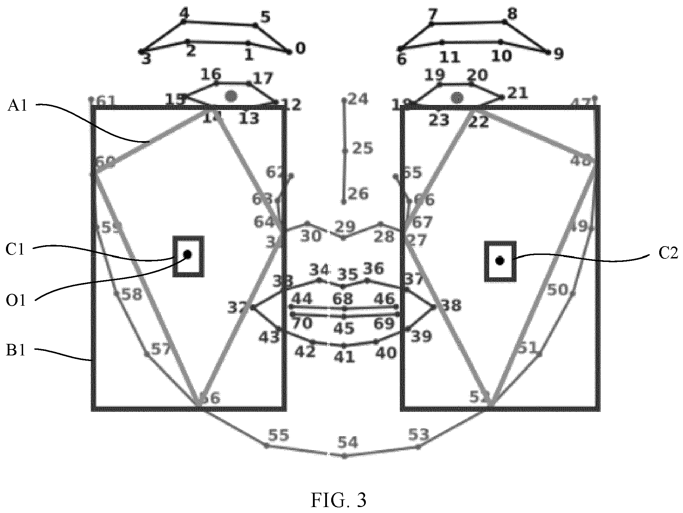

For selection of the skin color estimation ROI, after the face key points are determined, spatial location information of the face and five sense organs may be more accurately obtained. To more accurately determine a real skin color of a person in the image, an appropriate region needs to be selected for analysis. This is because not all regions of the face are skins, and eyes, eyebrows, lips, and the like are not in a skin color analysis range. Due to an angle, a large area of shade appears in a visible region at the back of cheeks, and interferes with subsequent skin color analysis. Therefore, in this embodiment of this application, a flat region under the eyes is selected as the ROI for subsequent skin color estimation, to avoid a shade region, a reflection region, and a region that does not fall within the skin color analysis range. Because the face is left-right symmetrical, two symmetrical regions on left and right sides are selected during ROI selection. The following uses a left region (from a perspective of an observer) as an example to explain how to select an ROI region. As shown in FIG. 3, FIG. 3 is a schematic diagram of a skin color estimation region of interest according to an embodiment of this application. In the image in which the face key points are determined, a quadrilateral region A1 may be framed by using key points 14, 31, 56, and 60 as vertexes. The quadrilateral region A1 is used as an inscribed quadrilateral, so that a bounding rectangle B1 of the quadrilateral region A1 and a central point O1 of the bounding rectangle B1 may be further obtained. Then, the bounding rectangle B1 is proportionally reduced by using the central point O1 as a center, to form a small rectangle C1 having the same center as the bounding rectangle B1, and the small rectangle C1 is used as one skin color estimation ROI. A rectangle C2 in a right region may be determined based on a same principle, and the rectangle C2 may be used as the other skin color estimation ROI. That is, C1 and C2 in FIG. 3 are skin color estimation ROIs.

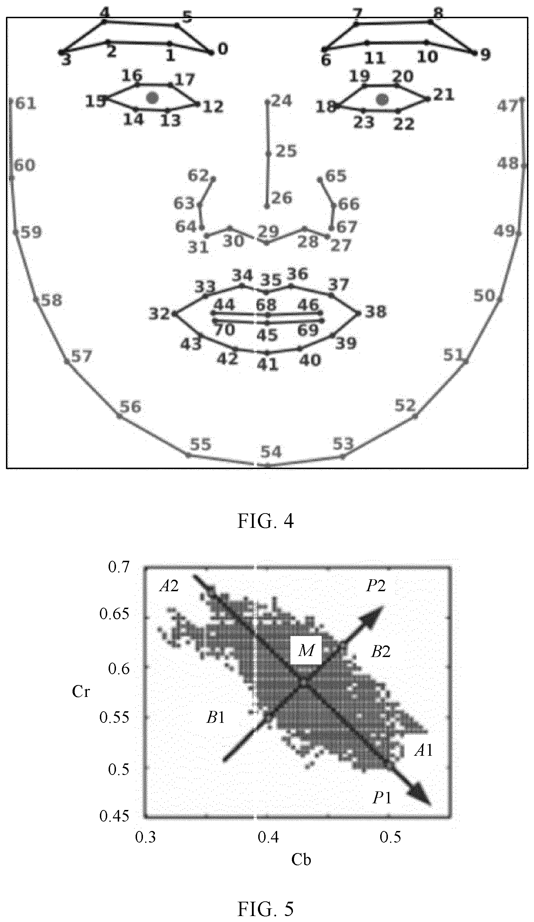

For selection of the illumination estimation ROI, first, the face image includes a background region in addition to a face region. A skin color estimation model is used in a subsequent step, and the skin color estimation model is obtained in advance through training based on training data. A collection scenario of the training data is a photo studio, and a background is relatively simple. If the model is trained on a basis of global illumination estimation, the model is easily interfered by a background when being applied to an actual scenario. Therefore, illumination estimation is only considered in the face region. An approximate rectangular face region may be first determined by using a face detection algorithm, and the region may be used as an illumination estimation ROI. For example, in this embodiment of this application, as shown in FIG. 4, FIG. 4 is a schematic diagram of an illumination estimation region of interest according to an embodiment of this application. For example, a rectangular box is selected by using a horizontal height of key points 4 and 8 as an upper height limit, using a height of a key point 54 as a lower limit, and using a width between 61 and 47 as a left-right width, and a region of the rectangular box is used as an illumination estimation ROI.

Step 104: Obtain a detected skin color value corresponding to the skin color estimation region of interest.

Step 105: Obtain a detected illumination color value corresponding to the illumination estimation region of interest.

It should be noted that an execution sequence between step 104 and step 105 is not limited in this embodiment of this application.

Step 106: Use the detected skin color value and the detected illumination color value as feature input of the skin color estimation model, and obtain a corrected skin color value output by the skin color estimation model.

Specifically, the skin color estimation model is a regression model, which may be obtained in advance through training based on training data. For example, a face image is collected in advance, and a real color value of a skin color of a person is detected by using a skin color detector, for example, color values of a total of 12 points on left and right cheeks of a photographed person are detected. The color value may include an RGB color value and an LAB color value. An individual typology angle (Individual Typology Angle, ITA) may be further detected. The RGB color value includes R, G, and B, where R represents a red color value, G represents a green color value, and B represents a blue color value. The LAB color value represents coordinates in an LAB color space. L represents black-and-white lightness, which is mainly affected by melanin in skin color measurement. A value of a represents red-green chromaticity, where a positive value represents red, a negative value represents green, and the red-green chromaticity is mainly affected by an oxygenation degree of oxygenated hemoglobin in skin color measurement. A value of b represents yellow-blue chromaticity in a horizontal axis, where a positive value represents yellow, a negative value represents blue, and the yellow-blue chromaticity can reflect a yellow degree of a skin. The ITA can reflect a degree of pigmentation in the skin. A higher ITA indicates a lighter skin color, and a lower ITA indicates a darker skin color. An average value of the detected color values corresponding to the 12 points may be used as the real value of the skin color. For example, as shown in Table 1, a plurality of mobile phones are used for each person to shoot a face image in 18 light source environments shown in Table 1, a camera is 20 to 40 cm away from a face, and a flash is turned on.

**Table 1**

| Light Source Type | Illumination Combination (5500k-3200k) | Color Temperature (k) | Illuminance (lux) |
|---|---|---|---|
| 1 | 33%-00% | 5630 | 300 |
| 2 | 01%-01% | 4100 | 100 |
| 3 | 00%-07% | 3100 | 100 |
| 4 | 00%-30% | 3200 | 300 |
| 5 | 00%-60% | 3200 | 550 |
| 6 | 00%-90% | 3200 | 765 |
| 7 | 30%-00% | 5700 | 315 |
| 8 | 30%-30% | 4130 | 620 |
| 9 | 30%-60% | 3800 | 845 |
| 10 | 30%-90% | 3650 | 1120 |
| 11 | 60%-00% | 5680 | 570 |
| 12 | 60%-30% | 4530 | 870 |
| 13 | 60%-60% | 4130 | 1130 |
| 14 | 60%-90% | 3935 | 1340 |
| 15 | 90%-00% | 5640 | 805 |
| 16 | 90%-30% | 4755 | 1100 |
| 17 | 90%-60% | 4357 | 1370 |
| 18 | 90%-90% | 4160 | 1570 |

Table 1 shows 18 light source environments, and each light source environment has a corresponding illumination color value. For example, a mobile phone T1 is used to shoot a face image of a tester P1 under a light source type 1, to obtain a face image K1. A real color value X1 of a skin color is obtained by using the skin color detector to measure the tester P1. The mobile phone T1 is used to perform skin color detection on the face image K1, to obtain a detected skin color value Y1. A skin color detection process herein may be the same as the manner in step 104. The mobile phone T1 is used to perform illumination detection on the face image K1, to obtain a detected illumination color value Z1. An illumination detection process herein may be the same as the manner in step 105. A first set of training data is obtained, including X1, Y1, and Z1. The mobile phone T1 is used to shoot a face image of the tester P1 under a light source type 2, to obtain a face image K2. The real color value of the skin color of the tester P1 is X1. The mobile phone T1 is used to perform skin color detection on the face image K2, to obtain a detected skin color value Y2. The mobile phone T1 is used to perform illumination detection on the face image K2, to obtain a detected illumination color value Z2. A second set of training data is obtained, including X1, Y2, and Z2. By analogy, a plurality of sets of training data are obtained by using different mobile phones and in different light source environments, and the obtained plurality of sets of training data are used to perform training, to establish a skin color estimation model. A training process is performed in advance. In the skin color detection method in this embodiment of this application, in step 106, the detected skin color value and the detected illumination color value that are currently detected are used as the feature input of the skin color estimation model. Because the skin color estimation model is established based on training data of different light source environments and different terminals during shooting, the corrected skin color value obtained based on the skin color estimation model is closer to the real skin color.

According to the skin color detection method in this embodiment of this application, the skin color estimation region of interest and the illumination estimation region of interest are determined based on the face key point, and detection is separately performed on the two regions to obtain the detected skin color value and the detected illumination color value. The two color values are used as the feature input of the skin color estimation model, to obtain the corrected skin color value output by the skin color estimation model. The skin color estimation model may be established in advance based on training data of different ambient light sources and different terminals. Therefore, the corrected skin color value output by the skin color estimation model is closer to the real skin color, impact on the skin color caused by different characteristics of camera photosensitive elements in the terminals and different ambient illumination is reduced, and accuracy of skin color detection is improved.

Optionally, step 104 of obtaining a detected skin color value corresponding to the skin color estimation region of interest includes: obtaining, through screening by using an elliptic skin color model, a pixel that is in the skin color estimation region of interest and that meets a preset condition; and calculating an average value of detected skin color values of the skin color estimation region of interest based on the pixel that is in the skin color estimation region of interest and that meets the preset condition, and using the average value as the detected skin color value corresponding to the skin color estimation region of interest.

Specifically, a skin condition of each person varies from person to person, some people have a smooth face, but some people have many pimples, spots, moles, or other non-skin color regions, and these regions are prone to interfere with skin color estimation to different degrees. Therefore, in step 104, these non-skin color pixels need to be excluded, only pure skin pixels are retained, and skin color detection is performed based on the pure skin pixels. A skin color is mainly determined by blood and melanin. The blood causes a skin to be yellow and red in tone, and the melanin causes the skin to be chocolate-brown in tone. Saturation of the skin is limited. Illumination changes in a daily living environment are limited. Under the limited change condition, skin colors can converge in a specific limited region in a color space. The elliptic skin color model uses a YCrCb color space. It is assumed that a color of a pixel is (R, G, B). After being converted into the YCrCb color space, the color is as follows:

$$\begin{cases} Y = 0.299R + 0.587G + 0.114B \\ Cb = -0.1687R - 0.3313G + 0.5B + 128 \\ Cr = 0.5R - 0.4187G - 0.0813B + 128 \end{cases}$$

Because the skin color is greatly affected by a value of Y, Y needs to be adjusted. That is, piecewise nonlinear transformation is performed on each YCbCr color value. After the transformation, the color value is expressed as follows:

$$\text{Ctr}(Y) = \begin{cases} (Cr(Y) - Dr(Y))\dfrac{Wr}{wr(y)} + Dr(Kh); \ if: \ y < Kl \ or \ kh < y \\ Cr(Y); \ if: \ y \in [Kl, Kh] \end{cases}$$

$$Wr(Y) = \begin{cases} WLcr + \dfrac{(Y - Ymi)(Wcr - WLcr)}{Kl - Ymi}; \ if: \ ym < KL \\ WHcr + \dfrac{(Yma - Y)(Wcr - WLcr)}{Yma - Kh}; \ if: \ kh < y \end{cases}$$

Herein, Web = 46.95, WLcb = 23, WHcb = 14, Wcr = 38.76, WLer = 20, WHci = 10, Kl = 25, Kh = 188, Ymi = 16, and Yma = 235. Finally, the distribution may be expressed by using an elliptic equation:

$$\frac{(X - ecx)^2}{a^2} + \frac{(Y - ecy)^2}{b^2} = 1$$

$$\begin{bmatrix} X \\ Y \end{bmatrix} = \begin{pmatrix} cos\,\theta & sin\,\theta \\ -sin\,\theta & cos\,\theta \end{pmatrix} \begin{bmatrix} Ctb - cx \\ Ctr - cy \end{bmatrix}$$

Herein, cx = 109.38, cy = 152.02, θ = 2.53, ecx = 2.41, a = 25.39, and b = 14.03.

As shown in FIG. 5, FIG. 5 is a schematic diagram of elliptic distribution met by a skin color according to an embodiment of this application. Black sample points in the figure are a large quantity of skin color values collected from samples. In step 104, a detected skin color value of each pixel in the skin color estimation region of interest is obtained, the detected skin color value of the pixel is converted into two coordinates Cr and Cb, and then a point corresponding to the coordinates is found in a coordinate system shown in FIG. 5. If the point corresponding to the coordinates is located in an

EP 4 131 065 B1

ellipse, it is determined that the pixel meets the preset condition and belongs to a skin. If the point corresponding to the coordinates is located outside the ellipse, it is determined that the pixel does not meet the preset condition, and belongs to a non-skin such as a pimple, a spot, or a mole. After detection and determining on all pixels in the skin color estimation region of interest are completed, that is, screening is completed, an average value of all detected skin color values meeting the preset condition is calculated, and the average value is used as the detected skin color value corresponding to the skin color estimation region of interest.

Optionally, step 105 of obtaining a detected illumination color value corresponding to the illumination estimation region of interest is: obtaining the detected illumination color value corresponding to the illumination estimation region of interest by using Gaussian filtering and a shades of gray shades of gray algorithm.

Specifically, besides a characteristic of a camera photosensitive element of a terminal, an illumination condition is another important factor that affects an image color. Under a standard light source, imaging of an object is considered to be closest to a real color. When a color temperature or intensity of illumination on a surface of the object changes, an imaging color of the object also changes. Objects that have different colors and that are matched with different illumination may even present a same color. The shades of gray algorithm is an unsupervised algorithm in which a color of a scene light source is detected based on an image feature. An advantage of the algorithm is that no training needs to be performed in advance. The shades of gray algorithm is obtained by using a Minkowski normal form to improve a gray world gray world algorithm; and is based on an assumption that an image pixel still has no chromatic aberration after nonlinear reversible transformation, and an average color of an image is an illumination color of the image. A formal description is as follows:

$$\frac{\int [f(x)]^p dx}{\int dx} \;=\; k$$

Herein, x represents a pixel value, and p represents the Minkowski normal form. Therefore, illumination chromaticity may be calculated:

$$\left[\frac{\int [f(x)]^p dx}{\int dx}\right]^{1/p} \;=\; ke$$

Further, it is proved that Gaussian pre-filtering performed on an image may further improve an illumination estimation effect. Therefore, a final illumination estimation form is as follows, where $G^\sigma$ represents a Gaussian filter.

$$\left[\frac{\int [f(x,\lambda) \otimes G^\sigma]^p dx}{\int dx}\right]^{1/p} \;=\; ke$$

An illumination estimation result obtained by using the foregoing algorithm is the detected illumination color value corresponding to the illumination estimation region of interest.

Optionally, in step 106, the corrected skin color value output by the skin color estimation model includes an RGB color value or an LAB color value.

Specifically, for example, the detected skin color value obtained in step 104 is an RGB color value $(R_1, G_1, B_1)$, the detected illumination color value obtained in step 105 is an RGB color value $(R_2, G_2, B_2)$, and the corrected skin color value output by the skin color estimation model is an RGB color value $(R_3, G_3, B_3)$. The skin color estimation model may be a support vector regression (support vector regression, SVR) model, and the SVR may be considered as a regression version of a support vector machine (support vector machine, SVM). The SVM is mainly used for a classification problem. The SVM maps an input feature to a high-dimensional space depending on a kernel function, and finds a maximized support vector interval, to determine a hyperplane to separate features of different samples. The SVM aims to maximize a distance from a nearest sample point to the hyperplane, and the SVR aims to minimize a distance from a farthest sample point to the hyperplane. The skin color estimation model may include three models $SVR_1$, $SVR_2$, and $SVR_3$, which are respectively used to implement mapping relationships between color values of three channels.

$$R_3 \;=\; \mathrm{SVR}_1(R_1, G_1, B_1, R_2, G_2, B_2)$$

$$G_3 \;=\; \mathrm{SVR}_2(R_1, G_1, B_1, R_2, G_2, B_2)$$

$$B_3 \;=\; \mathrm{SVR}_3(R_1, G_1, B_1, R_2, G_2, B_2)$$

In another feasible implementation, input and output of the skin color estimation model may be LAB color values, that is, LAB coordinates are used as the input and the output of the model. In addition, in another feasible implementation, the skin color estimation model may alternatively be another type of model.

Optionally, in step 106, the obtaining a corrected skin color value output by the skin color estimation model includes: obtaining an RGB color value output by the skin color estimation model. The skin color detection method further includes:

converting the RGB color value output by the skin color estimation model into an HSV color value, and determining a skin color tone based on the HSV color value; and

converting the RGB color value output by the skin color estimation model into an LAB color value, obtaining a corresponding individual typology angle (Individual Typology Angle, ITA) based on the LAB color value, and determining a skin color code based on the ITA.

Specifically, the HSV color value is a coordinate value in a hue, saturation, and value (Hue, Saturation, Value) color space, and the skin color tone needs to be determined based on the HSV color value. Therefore, the RGB color value needs to be first converted into the HSV color value. The ITA can reflect a degree of pigmentation in the skin. A higher ITA indicates a lighter skin color, and a lower ITA indicates a darker skin color. The skin color is determined by the ITA, and the ITA needs to be calculated by using the LAB color value. Therefore, the RGB color value needs to be first converted into the LAB color value, then the ITA is calculated based on the LAB color value, and finally, the skin color code is determined based on the ITA. The skin color tone and the skin color code together may be used as a basis for skin care. A process of calculating the ITA based on the LAB color value may be specifically $ITA = \arctan\left(\frac{L-50}{b}\right) \times \frac{180}{\pi}$, where L represents black-and-white lightness in the LAB color space, and b represents yellow-blue chromaticity in the LAB color space.

Optionally, in step 106, the obtaining a corrected skin color value output by the skin color estimation model includes: obtaining an RGB color value and an individual typology angle ITA that are output by the skin color estimation model. The skin color detection method further includes:

converting the RGB color value output by the skin color estimation model into an HSV color value, and determining a skin color tone based on the HSV color value; and

determining a skin color code based on the ITA output by the skin color estimation model.

Specifically, the skin color estimation model may further include a fourth model $SVR_4$, and $ITA = SVR_4(R_1, G_1, B_1, R_2, G_2, B_2)$. The $SVR_4$ is used to indicate a mapping relationship between an ITA and a color value. That is, in this embodiment, the ITA does not need to be calculated by converting the RGB color value, but the ITA is directly output by the skin color estimation model. The skin color code is determined by using the ITA. For the skin color tone, the RGB color value may be first converted into the HSV color value in a similar manner, and then the skin color tone is determined based on the HSV color value.

For the determining of the skin color tone, in the technical solution in this embodiment of this application, a cold, neutral, and warm tone division method of Pantone skin colors is used as a standard, statistics on a distribution law of cold, neutral, and warm Pantone skin colors in an H channel are collected, and a tone threshold is set. A detected skin color is converted to the HSV space, and a tone level is divided based on an H value. For example, if H > 12, the tone is determined to be warm; if $12 \geq H > 10$, the tone is determined to be neutral; and if $H \leq 10$, the tone is determined to be cold.

In addition, it should be noted that, in this embodiment of this application, only the RGB color value is used as an example for description. In this embodiment of this application, a color value representation form of a skin color or illumination is not limited, and may be an RGB color value, or may be a color value represented by coordinates in another color space.

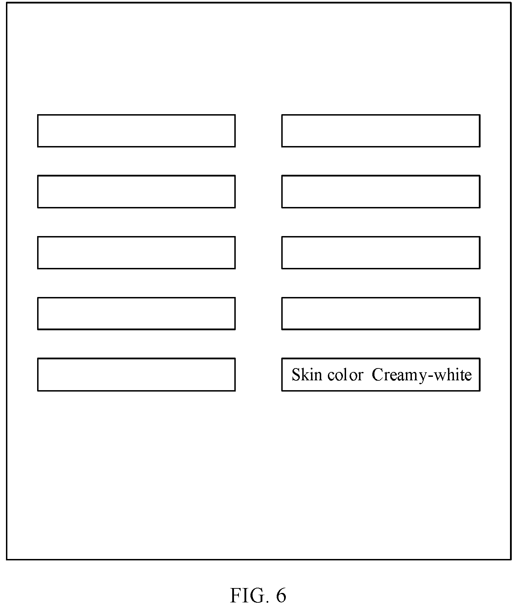

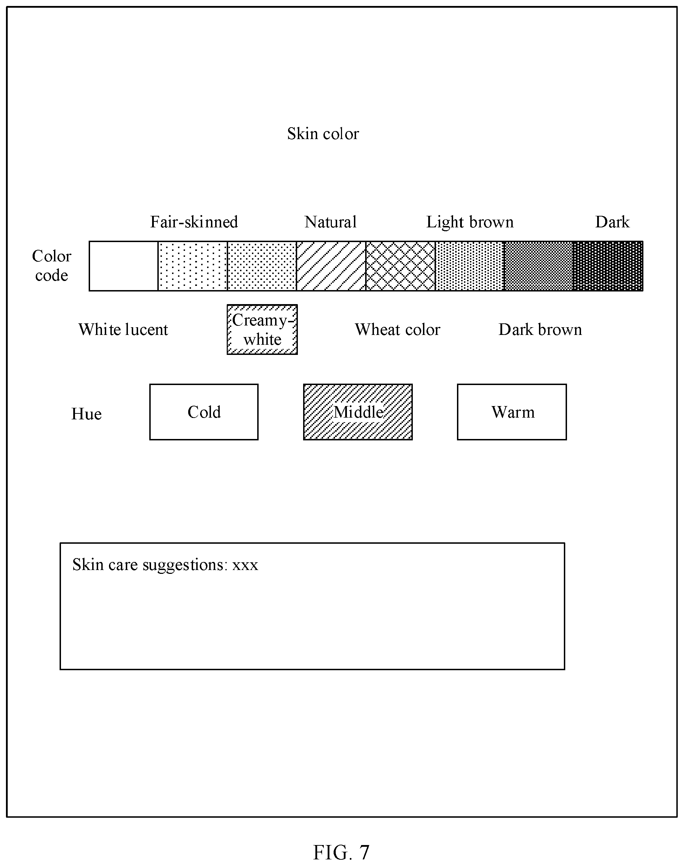

Optionally, as shown in FIG. 6 and FIG. 7, FIG. 6 is a schematic diagram of a status of a skin detection result interface according to an embodiment of this application, and FIG. 7 is a schematic diagram of a status of a skin color details interface according to an embodiment of this application. The skin color detection method further includes: generating a skin detection result interface, where as shown in FIG. 6, the skin detection result interface includes a skin color bar, and the skin color bar includes the skin color code, for example, the color code is creamy - white; and generating a skin color details interface in response to a selection instruction of the skin color bar, where as shown in FIG. 7, the skin color details interface includes the skin color code, the skin color tone, and a skin care suggestion.

Specifically, for example, on the skin detection result interface shown in FIG. 6, a plurality of status bars are included, where the skin color bar is used to display a skin color detection result, for example, creamy -white. For example, a pore status bar may be further included, to display a pore detection score; and for example, a blackhead status bar may be further included, to display a blackhead detection score. That is, the skin detection result interface may be used to display detection results for various skin items. Each single bar may be clicked to enter a details interface. For example, the skin color details interface shown in FIG. 7 is generated and entered in response to the selection instruction of the skin color bar. The skin color details interface includes a skin color code bar, which is used to specifically display the skin color code. The skin color code may be more intuitively displayed in a visual form. For example, the skin color code is displayed in a color card form, where a color code "creamy-white" corresponding to a detection result is highlighted. The skin detection result interface further includes a skin color tone bar, which is used to display the skin color tone. The skin color code and the skin color tone herein are detection results determined based on a result output by the skin color estimation model. In addition, the skin color details interface may further include a skin care suggestion. The skin care suggestion may be content determined based on a corresponding skin color code and skin color tone, and is used to provide a targeted skin care suggestion based on a detection result.

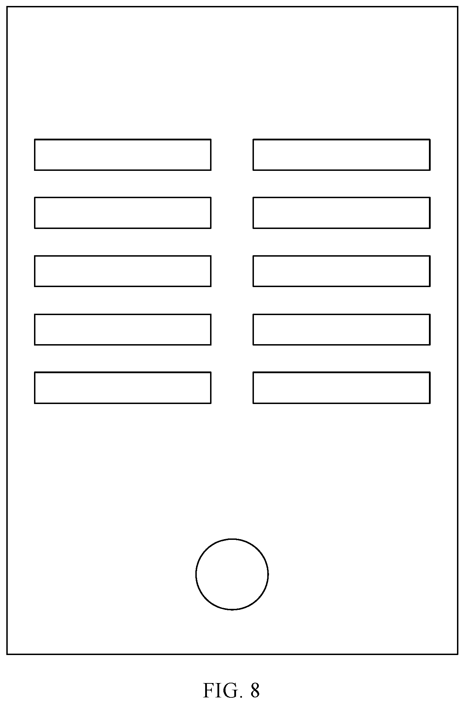

Optionally, as shown in FIG. 8, FIG. 8 is a schematic diagram of a status of a skin detection interface according to an embodiment of this application. Before step 101 of obtaining a face image, the skin color detection method further includes: generating a skin detection interface, where the skin detection interface includes skin detection history information and a skin detection icon; and in response to a selection instruction of the skin detection icon, entering a process of obtaining the face image.

Specifically, for example, rectangular boxes in FIG. 8 represent history information of various skin detection items, for example, including a pore detection score, a blackhead detection score, and a skin color detection result of previous detection, so that a user knows historical detection information before performing skin detection. A circular box in FIG. 8 represents a skin detection icon. When the user clicks the icon, a selection instruction of the skin detection icon is generated, and in response to the selection instruction of the skin detection icon, a process of obtaining a face image is entered, that is, step 101 is entered. For example, after the skin detection icon is clicked, an image selection interface may be first entered, and includes a shooting option and a memory reading option. If the shooting option is selected, a shooting interface is entered, and the user may control the terminal to shoot an image. After the shooting is completed, step 101 is entered, and the currently shot image is used as an obtained face image in step 101. If the memory reading option is selected, a reading selection interface is entered, and the user may select a picture from a memory of the terminal. After the selection is completed, step 101 is entered, and the currently selected picture is used as an obtained face image in step 101.

The following provides a comparison between a result detected in this embodiment of this application and a real value detected by a dedicated detector, to further describe an effect of this embodiment of this application, as shown in Table 2.

**Table 2**

| Terminal Model | Average Error (RGB Color Value) | Average Error (ITA) |
|---|---|---|
| 1 | 19.86 | 6.89 |
| 2 | 20.03 | 6.56 |
| 3 | 22.45 | 7.03 |
| Average value | 20.78 | 6.83 |

Table 2 shows average errors at a plurality of terminals, including average errors between RGB color values detected in this embodiment of this application and real RGB color values detected by a dedicated measuring instrument at three terminals, and average errors between ITAs detected in this embodiment of this application and real ITAs detected by the dedicated measuring instrument at the three terminals. It may be learned from the table that an error between a result detected in this embodiment of this application and a real result is relatively small.

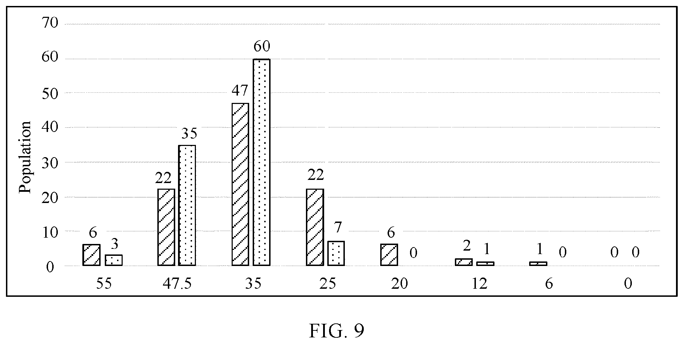

As shown in FIG. 9, FIG. 9 is a schematic diagram of population distribution corresponding to different ITA threshold intervals according to an embodiment of this application. A horizontal coordinate represents an ITA threshold interval. For example, ITAs are divided into eight threshold intervals based on skin color characteristics of Asians, and the eight threshold intervals may correspond to eight levels of skin color codes. A vertical coordinate represents a population. Diagonal filling indicates population distribution results that are of different color code levels and that are detected by a dedicated measuring instrument. Dot filling indicates population distribution results that are of different color code levels and that are detected in this embodiment of this application. It may be learned that population distribution corresponding to the diagonal filling and the dot filling is relatively close, that is, a difference between a result detected in this embodiment of this application and a real result is relatively small.

An embodiment of this application further provides a skin color detection apparatus, including: an image obtaining module, configured to obtain a face image; a key point determining module, configured to determine a face key point in the face image; a region determining module, configured to determine a skin color estimation region of interest and an illumination estimation region of interest in the face image based on the face key point; a skin color detection module, configured to obtain a detected skin color value corresponding to the skin color estimation region of interest; an illumination detection module, configured to obtain a detected illumination color value corresponding to the illumination estimation region of interest; and a skin color correction module, configured to use the detected skin color value and the detected illumination color value as feature input of a skin color estimation model, and obtain a corrected skin color value output by the skin color estimation model.

The skin color detection apparatus may use the skin color detection method in the foregoing embodiment. A specific process and principle are the same as the process and the principle in the foregoing embodiment, and details are not described herein. It should be understood that division of the modules of the skin color detection apparatus is merely division of logical functions, and during actual implementation, the modules may be all or partially integrated into one physical entity, or may be physically separated. In addition, all of these modules may be implemented in a form of software to be invoked by a processing element, or may be implemented in a form of hardware. Alternatively, some modules may be implemented in a form of software to be invoked by a processing element, and some modules may be implemented in a form of hardware. For example, the skin color correction module may be a separately disposed processing element, or may be integrated into, for example, a chip of a terminal for implementation. In addition, the skin color correction module may alternatively be stored in a memory of the terminal in a form of a program, and a processing element of the terminal invokes and executes functions of the foregoing modules. Implementation of another module is similar. In addition, all or some of these modules may be integrated together, or may be independently implemented. The processing element may be an integrated circuit chip and has a signal processing capability. In an implementation process, steps in the foregoing methods or the foregoing modules can be implemented by using a hardware integrated logical circuit in the processing element, or by using instructions in a form of software.

For example, the foregoing modules may be one or more integrated circuits configured to perform the foregoing method, such as one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the foregoing modules is implemented by a processing element by scheduling a program, the processing element may be a general purpose processor, for example, a central processing unit (Central Processing Unit, CPU) or another processor that may invoke a program. For another example, the modules may be integrated together and implemented in a form of a system-on-a-chip (system-on-a-chip, SOC).

An embodiment of this application further provides a skin color detection apparatus, including a processor and a memory. The memory is configured to store at least one instruction, and when the instruction is loaded and executed by the processor, the skin color detection method in the foregoing embodiment is implemented.

A specific process and principle of the skin color detection method are the same as the process and the principle in the foregoing embodiment, and details are not described herein. There may be one or more processors, and the processor and the memory may be connected by using a bus or in another manner. As a non-transient computer-readable storage medium, the memory may be configured to store a non-transient software program and a non-transient computer-executable program and module. The processor runs the non-transient software program, instruction, and module stored in the memory, to execute various functional applications and data processing, that is, implement the method in any of the foregoing method embodiments. The memory may include a program storage area and a data storage area. The program storage area may store an operating system, an application required by at least one function, necessary data, and the like. In addition, the memory may include a high-speed random access memory, and may further include a non-transient memory, for example, at least one magnetic disk storage device, a flash device, or another non-transient solid-state storage device.

An embodiment of this application further provides a terminal, including the foregoing skin color detection apparatus. The terminal may be specifically an intelligent terminal device such as a mobile phone or a tablet computer, and the terminal further includes a display apparatus. The terminal may implement communication with a server. A skin color estimation model may be established in advance through training based on data stored in the server. When performing skin color detection, the terminal may invoke the model trained on the server, to obtain a result output by the skin color estimation model, and display the result.

An embodiment of this application further provides a computer-readable storage medium. The computer-readable storage medium stores a computer program, and when the computer program is run on a computer, the computer is enabled to perform the foregoing skin color detection method.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk)), or the like.

In this application, at least one means one or more, and a plurality of means two or more. The term "and/or" describes an association relationship for describing associated objects and represents that three relationships may exist. For example, A and/or B may represent the following three cases: Only A exists, both A and B exist, and only B exists, where A and B may be singular or plural. The character "/" usually indicates an "or" relationship between associated objects. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

## Claims

1. A skin color detection method, comprising:

   obtaining (101) a face image;
   determining (102) a first plurality of face key points in the face image;
   determining (103) a skin color estimation region of interest and an illumination estimation region of interest in the face image based on the face key points;
   obtaining (104) a detected skin color value corresponding to the skin color estimation region of interest;
   obtaining (105) a detected illumination color value corresponding to the illumination estimation region of interest; and
   using (106) the detected skin color value and the detected illumination color value as feature input of a skin color estimation model, and obtaining a corrected skin color value output by the skin color estimation model.

2. The skin color detection method according to claim 1, wherein
   the obtaining (104) a detected skin color value corresponding to the skin color estimation region of interest comprises:

   obtaining, through screening by using an elliptic skin color model, a pixel that is in the skin color estimation region of interest and that meets a preset condition; and
   calculating an average value of detected skin color values of the skin color estimation region of interest based on the pixel that is in the skin color estimation region of interest and that meets the preset condition, and using the average value as the detected skin color value corresponding to the skin color estimation region of interest.

3. The skin color detection method according to claim 1, wherein
   the obtaining a detected illumination color value corresponding to the illumination estimation region of interest comprises:
   obtaining the detected illumination color value corresponding to the illumination estimation region of interest by using Gaussian filtering and a shades of gray algorithm.

4. The skin color detection method according to claim 1, wherein
   the corrected skin color value output by the skin color estimation model comprises an RGB color value or an LAB color value.

5. The skin color detection method according to claim 1, wherein

   the obtaining a corrected skin color value output by the skin color estimation model comprises: obtaining an RGB color value output by the skin color estimation model; and
   the skin color detection method further comprises:

   converting the RGB color value output by the skin color estimation model into an HSV color value, and determining a skin color tone based on the HSV color value; and
   converting the RGB color value output by the skin color estimation model into an LAB color value, obtaining a corresponding individual typology angle ITA based on the LAB color value, and determining a skin color code based on the ITA.

6. The skin color detection method according to claim 1, wherein

the obtaining a corrected skin color value output by the skin color estimation model comprises: obtaining an RGB color value and an individual typology angle ITA that are output by the skin color estimation model; and the skin color detection method further comprises:

converting the RGB color value output by the skin color estimation model into an HSV color value, and determining a skin color tone based on the HSV color value; and determining a skin color code based on the ITA output by the skin color estimation model.

7. The skin color detection method according to claim 5 or 6, wherein the skin color detection method further comprises:

generating a skin detection result interface, wherein the skin detection result interface comprises a skin color bar, and the skin color bar comprises the skin color code; and generating a skin color details interface in response to a selection instruction of the skin color bar, wherein the skin color details interface comprises the skin color code, the skin color tone, and a skin care suggestion.

8. The skin color detection method according to claim 1, wherein
before the obtaining (101) a face image, the skin color detection method further comprises:

generating a skin detection interface, wherein the skin detection interface comprises skin detection history information and a skin detection icon; and in response to a selection instruction of the skin detection icon, entering a process of obtaining the face image.

9. The skin color detection method according to claim 1, wherein the determining (103) a skin color estimation region of interest comprising:

obtaining a first rectangle based on a second plurality of face key points, wherein the second plurality of face key points are selected from the first plurality of face key points; obtaining a central point of the first rectangle; zooming out the first rectangle based on the central point to generate the skin color estimation region of interest; wherein the skin color estimation region of interest is a rectangle smaller than the first rectangle.

10. The skin color detection method according to claim 1, wherein the determining (103) an illumination estimation region of interest comprising:
obtaining a second rectangle as the illumination estimation region of interest based on a third plurality of face key points, wherein the third plurality of face key points are selected from the first plurality of face key points.

11. A skin color detection apparatus, comprising:
a processor and a memory, wherein the memory is configured to store at least one instruction, and when the instruction is loaded and executed by the processor, the apparatus is enabled to perform:

obtaining a face image;
determining a first plurality of face key points in the face image;
determining a skin color estimation region of interest and an illumination estimation region of interest in the face image based on the face key points;
obtaining a detected skin color value corresponding to the skin color estimation region of interest;
obtaining a detected illumination color value corresponding to the illumination estimation region of interest; and
using the detected skin color value and the detected illumination color value as feature input of a skin color estimation model, and obtaining a corrected skin color value output by the skin color estimation model.

12. The skin color detection apparatus according to claim 11, wherein the apparatus is further enabled to perform:

obtaining, through screening by using an elliptic skin color model, a pixel that is in the skin color estimation region of interest and that meets a preset condition; and

calculating an average value of detected skin color values of the skin color estimation region of interest based on the pixel that is in the skin color estimation region of interest and that meets the preset condition, and using the average value as the detected skin color value corresponding to the skin color estimation region of interest.

13. The skin color detection apparatus according to claim 11, wherein the apparatus is further enabled to perform: obtaining the detected illumination color value corresponding to the illumination estimation region of interest by using Gaussian filtering and a shades of gray algorithm.

14. The skin color detection apparatus according to claim 11, wherein the apparatus is further enabled to perform:

generating a skin detection result interface, wherein the skin detection result interface comprises a skin color bar, and the skin color bar comprises the skin color code; and
generating a skin color details interface in response to a selection instruction of the skin color bar, wherein the skin color details interface comprises the skin color code, the skin color tone, and a skin care suggestion.

15. The skin color detection apparatus according to claim 11, wherein the apparatus is further enabled to perform: before the obtaining a face image, generating a skin detection interface, wherein the skin detection interface comprises skin detection history information and a skin detection icon; and
in response to a selection instruction of the skin detection icon, entering a process of obtaining the face image.

**Patentansprüche**

1. Hautfarbenerkennungsverfahren, umfassend:

Erlangen (101) eines Gesichtsbilds;
Bestimmen (102) einer ersten Vielzahl von Gesichtsschlüsselpunkten in dem Gesichtsbild;
Bestimmen (103) eines interessierenden Hautfarbenschätzungsbereichs und eines interessierenden Beleuchtungsschätzungsbereichs in dem Gesichtsbild basierend auf den Gesichtsschlüsselpunkten;
Erlangen (104) eines erkannten Hautfarbwerts, der dem interessierenden Hautfarbenschätzungsbereich entspricht;
Erlangen (105) eines erkannten Beleuchtungsfarbwerts, der dem interessierenden Beleuchtungsschätzungsbereich entspricht; und
Verwenden (106) des erkannten Hautfarbwerts und des erkannten Beleuchtungsfarbwerts als eine Merkmaleingabe eines Hautfarbenschätzungsmodells und Erlangen eines korrigierten Hautfarbwerts, der durch das Hautfarbenschätzungsmodell ausgegeben wird.

2. Hautfarbenerkennungsverfahren nach Anspruch 1, wobei das Erlangen (104) eines erkannten Hautfarbwerts, der dem interessierenden Hautfarbenschätzungsbereich entspricht, Folgendes umfasst:

Erlangen, durch Screening unter Verwendung eines elliptischen Hautfarbenmodells, eines Pixels, das sich in dem interessierenden Hautfarbenschätzungsbereich befindet und das eine voreingestellte Bedingung erfüllt; und
Berechnen eines Durchschnittswerts erkannter Hautfarbwerte des interessierenden Hautfarbenschätzungsbereichs basierend auf dem Pixel, das sich in dem interessierenden Hautfarbenschätzungsbereich befindet und das die voreingestellte Bedingung erfüllt, und Verwenden des Durchschnittswerts als den erkannten Hautfarbwert, der dem interessierenden Hautfarbenschätzungsbereich entspricht.

3. Hautfarbenerkennungsverfahren nach Anspruch 1, wobei das Erlangen eines erkannten Beleuchtungsfarbwerts, der dem interessierenden Beleuchtungsschätzungsbereich entspricht, Folgendes umfasst:
Erlangen des erkannten Beleuchtungsfarbwerts, der dem interessierenden Beleuchtungsschätzungsbereich entspricht, durch Verwendung einer Gauß-Filterung und eines Graustufenalgorithmus.

4. Hautfarbenerkennungsverfahren nach Anspruch 1, wobei der korrigierte Hautfarbwert, der durch das Hautfarbenschätzungsmodell ausgegeben wird, einen RGB-Farbwert oder einen LAB-Farbwert umfasst.

5. Hautfarbenerkennungsverfahren nach Anspruch 1, wobei das Erlangen eines korrigierten Hautfarbwerts, der durch das Hautfarbenschätzungsmodell ausgegeben wird, Folgendes umfasst:

Erlangen eines RGB-Farbwerts, der durch das Hautfarbenschätzungsmodell ausgegeben wird; und
das Hautfarbenerkennungsverfahren ferner Folgendes umfasst:

Umwandeln des RGB-Farbwerts, der durch das Hautfarbenschätzungsmodell ausgegeben wird, in einen HSV-Farbwert und Bestimmen eines Hautfarbtons basierend auf dem HSV-Farbwert; und
Umwandeln des RGB-Farbwerts, der durch das Hautfarbenschätzungsmodell ausgegeben wird, in einen LAB-Farbwert, Erlangen eines entsprechenden individuellen Typologiewinkels ITA basierend auf dem LAB-Farbwert und Bestimmen eines Hautfarbcodes basierend auf dem ITA.

6. Hautfarbenerkennungsverfahren nach Anspruch 1, wobei das Erlangen eines korrigierten Hautfarbwerts, der durch das Hautfarbenschätzungsmodell ausgegeben wird, Folgendes umfasst:

Erlangen eines RGB-Farbwerts und eines entsprechenden individuellen Typologiewinkels ITA, die durch das Hautfarbenschätzungsmodell ausgegeben werden; und
das Hautfarbenerkennungsverfahren ferner Folgendes umfasst:

Umwandeln des RGB-Farbwerts, der durch das Hautfarbenschätzungsmodell ausgegeben wird, in einen HSV-Farbwert und Bestimmen eines Hautfarbtons basierend auf dem HSV-Farbwert; und
Bestimmen eines Hautfarbcodes basierend auf dem ITA, der durch das Hautfarbenschätzungsmodell ausgegeben wird.

7. Hautfarbenerkennungsverfahren nach Anspruch 5 oder 6, wobei das Hautfarbenerkennungsverfahren ferner Folgendes umfasst:

Erzeugen einer Hauterkennungsergebnisschnittstelle, wobei die Hauterkennungsergebnisschnittstelle eine Hautfarbleiste umfasst und die Hautfarbleiste den Hautfarbcode umfasst; und
Erzeugen einer Hautfarbdetailschnittstelle als Reaktion auf eine Auswahlanweisung der Hautfarbleiste, wobei die Hautfarbdetailschnittstelle den Hautfarbcode, den Hautfarbton und einen Hautpflegevorschlag umfasst.

8. Hautfarbenerkennungsverfahren nach Anspruch 1, wobei das Hautfarbenerkennungsverfahren vor dem Erlangen (101) eines Gesichtsbilds ferner Folgendes umfasst:

Erzeugen einer Hauterkennungsschnittstelle, wobei die Hauterkennungsschnittstelle Hauterkennungsverlaufsinformationen und ein Hauterkennungssymbol umfasst; und
als Reaktion auf eine Auswahlanweisung des Hauterkennungssymbols, Wechseln zu einem Prozess zum Erlangen des Gesichtsbilds.

9. Hautfarbenerkennungsverfahren nach Anspruch 1, wobei das Bestimmen (103) eines interessierenden Hautfarbenschätzungsbereichs Folgendes umfasst:

Erlangen eines ersten Rechtecks basierend auf einer zweiten Vielzahl von Gesichtsschlüsselpunkten, wobei die zweite Vielzahl von Gesichtsschlüsselpunkten aus der ersten Vielzahl von Gesichtsschlüsselpunkten ausgewählt wird;
Erlangen eines Mittelpunkts des ersten Rechtecks; Herauszoomen des ersten Rechtecks basierend auf dem Mittelpunkt, um den interessierenden Hautfarbenschätzungsbereich zu erzeugen; wobei der interessierende Hautfarbenschätzungsbereich ein Rechteck ist, das kleiner als das erste Rechteck ist.

10. Hautfarbenerkennungsverfahren nach Anspruch 1, wobei das Bestimmen (103) eines interessierenden Beleuchtungsschätzungsbereichs Folgendes umfasst:
Erlangen eines zweiten Rechtecks als den interessierenden Beleuchtungsschätzungsbereich basierend auf einer dritten Vielzahl von Gesichtsschlüsselpunkten, wobei die dritte Vielzahl von Gesichtsschlüsselpunkten aus der ersten Vielzahl von Gesichtsschlüsselpunkten ausgewählt wird.

11. Hautfarbenerkennungsvorrichtung, umfassend:

einen Prozessor und einen Speicher, wobei der Speicher dazu konfiguriert ist, mindestens eine Anweisung zu speichern, und,
wenn die Anweisung durch den Prozessor geladen und ausgeführt wird, die Vorrichtung dazu in die Lage versetzt wird, Folgendes durchzuführen:

Erlangen eines Gesichtsbilds;
Bestimmen einer ersten Vielzahl von Gesichtsschlüsselpunkten in dem Gesichtsbild;
Bestimmen eines interessierenden Hautfarbenschätzungsbereichs und eines interessierenden Beleuchtungsschätzungsbereichs in dem Gesichtsbild basierend auf den Gesichtsschlüsselpunkten;
Erlangen eines erkannten Hautfarbwerts, der dem interessierenden Hautfarbenschätzungsbereich entspricht;
Erlangen eines erkannten Beleuchtungsfarbwerts, der dem interessierenden Beleuchtungsschätzungsbereich entspricht; und
Verwenden des erkannten Hautfarbwerts und des erkannten Beleuchtungsfarbwerts als eine Merkmalseingabe eines Hautfarbenschätzungsmodells und Erlangen eines korrigierten Hautfarbwerts, der durch das Hautfarbenschätzungsmodell ausgegeben wird.

12. Hautfarbenerkennungsvorrichtung nach Anspruch 11, wobei die Vorrichtung ferner dazu in die Lage versetzt wird, Folgendes durchzuführen:

Erlangen, durch Screening unter Verwendung eines elliptischen Hautfarbenmodells, eines Pixels, das sich in dem interessierenden Hautfarbenschätzungsbereich befindet und das eine voreingestellte Bedingung erfüllt; und
Berechnen eines Durchschnittswerts erkannter Hautfarbwerte des interessierenden Hautfarbenschätzungsbereichs basierend auf dem Pixel, das sich in dem interessierenden Hautfarbenschätzungsbereich befindet und das die voreingestellte Bedingung erfüllt, und Verwenden des Durchschnittswerts als den erkannten Hautfarbwert, der dem interessierenden Hautfarbenschätzungsbereich entspricht.

13. Hautfarbenerkennungsvorrichtung nach Anspruch 11, wobei die Vorrichtung ferner dazu in die Lage versetzt wird, Folgendes durchzuführen:

Erlangen des erkannten Beleuchtungsfarbwerts, der dem interessierenden Beleuchtungsschätzungsbereich entspricht,
durch Verwendung einer Gauß-Filterung und eines Graustufenalgorithmus.

14. Hautfarbenerkennungsvorrichtung nach Anspruch 11, wobei die Vorrichtung ferner dazu in die Lage versetzt wird, Folgendes durchzuführen:

Erzeugen einer Hauterkennungsergebnisschnittstelle, wobei die Hauterkennungsergebnisschnittstelle eine Hautfarbleiste umfasst und die Hautfarbleiste den Hautfarbcode umfasst; und
Erzeugen einer Hautfarbdetailschnittstelle als Reaktion auf eine Auswahlanweisung der Hautfarbleiste, wobei die Hautfarbdetailschnittstelle den Hautfarbcode, den Hautfarbton und einen Hautpflegevorschlag umfasst.

15. Hautfarbenerkennungsvorrichtung nach Anspruch 11, wobei die Vorrichtung ferner dazu in die Lage versetzt wird, Folgendes durchzuführen:

vor dem Erlangen eines Gesichtsbilds, Erzeugen einer Hauterkennungsschnittstelle, wobei die Hauterkennungsschnittstelle
Hauterkennungsverlaufsinformationen und ein Hauterkennungssymbol umfasst; und
als Reaktion auf eine Auswahlanweisung des Hauterkennungssymbols, Wechseln zu einem Prozess zum Erlangen des Gesichtsbilds.

**Revendications**

1. Procédé de détection de couleur de peau, comprenant :

l'obtention (101) d'une image de visage ;
la détermination (102) d'une première pluralité de points clés de visage dans l'image de visage ;
la détermination (103) d'une région d'intérêt d'estimation de couleur de peau et d'une région d'intérêt d'estimation de l'éclairage dans l'image de visage sur la base des points clés de visage ;

l'obtention (104) d'une valeur de couleur de peau détectée correspondant à la région d'intérêt d'estimation de couleur de peau ;

l'obtention (105) d'une valeur de couleur d'éclairage détectée correspondant à la région d'intérêt d'estimation d'éclairage ; et

l'utilisation (106) de la valeur de couleur de peau détectée et de la valeur de couleur d'éclairage détectée comme entrée de caractéristique d'un modèle d'estimation de couleur de peau, et l'obtention d'une valeur de couleur de peau corrigée sortie par le modèle d'estimation de couleur de peau.

2. Procédé de détection de couleur de peau selon la revendication 1, dans lequel l'obtention (104) d'une valeur de couleur de peau détectée correspondant à la région d'intérêt d'estimation de couleur de peau comprend :

l'obtention, par filtrage à l'aide d'un modèle elliptique de couleur de peau, d'un pixel qui se trouve dans la région d'intérêt d'estimation de couleur de peau et qui répond à une condition prédéfinie ; et

le calcul d'une valeur moyenne des valeurs de couleur de peau détectées de la région d'intérêt d'estimation de couleur de peau sur la base du pixel qui se trouve dans la région d'intérêt d'estimation de couleur de peau et qui répond à la condition prédéfinie, et l'utilisation de la valeur moyenne comme valeur de couleur de peau détectée correspondant à la région d'intérêt d'estimation de couleur de peau.

3. Procédé de détection de couleur de peau selon la revendication 1, dans lequel l'obtention d'une valeur de couleur d'éclairage détectée correspondant à la région d'intérêt d'estimation d'éclairage comprend :

l'obtention de la valeur de couleur d'éclairage détectée correspondant à la région d'intérêt d'estimation d'éclairage à l'aide d'un filtrage gaussien et d'un algorithme de nuances de gris.

4. Procédé de détection de couleur de peau selon la revendication 1, dans lequel la valeur de couleur de peau corrigée sortie par le modèle d'estimation de couleur de peau comprend une valeur de couleur RVB ou une valeur de couleur LAB.

5. Procédé de détection de couleur de peau selon la revendication 1, dans lequel l'obtention d'une valeur de couleur de peau corrigée sortie par le modèle d'estimation de couleur de peau comprend :

l'obtention d'une valeur de couleur RVB sortie par le modèle d'estimation de couleur de peau ; et le procédé de détection de couleur de peau comprend également :

la conversion de la valeur de couleur RVB sortie par le modèle d'estimation de couleur de peau en une valeur de couleur HSV et la détermination d'une teinte de couleur de peau basée sur la valeur de couleur HSV ; et la conversion de la valeur de couleur RVB sortie par le modèle d'estimation de couleur de peau en une valeur de couleur LAB, l'obtention d'un angle de typologie individuel correspondant ITA basé sur la valeur de couleur LAB et la détermination d'un code de couleur de peau basé sur l'ITA.

6. Procédé de détection de couleur de peau selon la revendication 1, dans lequel l'obtention d'une valeur de couleur de peau corrigée sortie par le modèle d'estimation de couleur de peau comprend :

l'obtention d'une valeur de couleur RVB et d'un angle de typologie individuel ITA sortis par le modèle d'estimation de couleur de peau ; et le procédé de détection de couleur de peau comprend également :

la conversion de la valeur de couleur RVB sortie par le modèle d'estimation de couleur de peau en une valeur de couleur HSV et la détermination d'une teinte de couleur de peau basée sur la valeur de couleur HSV ; et la détermination d'un code de couleur de peau basé sur la sortie ITA du modèle d'estimation de couleur de peau.

7. Procédé de détection de couleur de peau selon la revendication 5 ou 6, dans lequel le procédé de détection de couleur de peau comprend également :

la génération d'une interface de résultat de détection de peau, dans lequel l'interface de résultat de détection de peau comprend une barre de couleur de peau, et la barre de couleur de peau comprend le code de couleur de peau ; et
la génération d'une interface de détails de couleur de peau en réponse à une instruction de sélection de la barre de couleur de peau, dans lequel l'interface de détails de couleur de peau comprend le code de couleur de peau, la teinte de couleur de peau et une suggestion de soin de peau.

8. Procédé de détection de couleur de peau selon la revendication 1, dans lequel
avant l'obtention (101) d'une image de visage, le procédé de détection de couleur de peau comprend également :

la génération d'une interface de détection de peau, dans lequel l'interface de détection de peau comprend des informations sur l'historique de détection de peau et une icône de détection de peau ; et
en réponse à une instruction de sélection de l'icône de détection de peau, l'entrée dans un processus d'obtention de l'image de visage.

9. Procédé de détection de couleur de peau selon la revendication 1, dans lequel la détermination (103) d'une région d'intérêt d'estimation de couleur de peau comprenant :

l'obtention d'un premier rectangle basé sur une deuxième pluralité de points clés de visage, dans lequel la deuxième pluralité de points clés de visage est sélectionnée parmi la première pluralité de points clés de visage ;
l'obtention d'un point central du premier rectangle ;
la réalisation d'un zoom arrière sur le premier rectangle sur la base du point central pour générer la région d'intérêt d'estimation de couleur de peau ; dans lequel la région d'intérêt d'estimation de couleur de peau est un rectangle plus petit que le premier rectangle.

10. Procédé de détection de couleur de peau selon la revendication 1, dans lequel la détermination (103) d'une région d'intérêt d'estimation d'éclairage comprenant :
l'obtention d'un second rectangle en tant que région d'intérêt d'estimation d'éclairage sur la base d'une troisième pluralité de points clés de visage, dans lequel la troisième pluralité de points clés de visage est sélectionnée parmi la première pluralité de points clés de visage.

11. Appareil de détection de couleur de peau, comprenant :

un processeur et une mémoire, dans lequel la mémoire est configurée pour stocker au moins une instruction, et lorsque l'instruction est chargée et exécutée par le processeur,
l'appareil est activé pour réaliser :

l'obtention d'une image de visage ;
la détermination d'une première pluralité de points clés de visage dans l'image de visage ;
la détermination d'une région d'intérêt d'estimation de couleur de peau et d'une région d'intérêt d'estimation d'éclairage dans l'image de visage sur la base des points clés de visage ;
l'obtention d'une valeur de couleur de peau détectée correspondant à la région d'intérêt d'estimation de couleur de peau ;
l'obtention d'une valeur de couleur d'éclairage détectée correspondant à la région d'intérêt d'estimation d'éclairage ; et
l'utilisation de la valeur de couleur de peau détectée et de la valeur de couleur d'éclairage détectée comme entrée de caractéristique d'un modèle d'estimation de couleur de peau,
et l'obtention d'une valeur de couleur de peau corrigée sortie par le modèle d'estimation de couleur de peau.

12. Appareil de détection de couleur de peau selon la revendication 11, dans lequel l'appareil est également activé pour réaliser :

l'obtention, par filtrage à l'aide d'un modèle elliptique de couleur de peau, d'un pixel qui se trouve dans la région d'intérêt d'estimation de couleur de peau et qui répond à une condition prédéfinie ; et
le calcul d'une valeur moyenne des valeurs de couleur de peau détectées de la région d'intérêt d'estimation de couleur de peau sur la base du pixel qui se trouve dans la région d'intérêt d'estimation de couleur de peau et qui répond à la condition prédéfinie, et l'utilisation de la valeur moyenne comme valeur de couleur de peau détectée correspondant à la région d'intérêt d'estimation de couleur de peau.

13. Appareil de détection de couleur de peau selon la revendication 11, dans lequel l'appareil est également activé pour réaliser :
l'obtention de la valeur de couleur d'éclairage détectée correspondant à la région d'intérêt d'estimation d'éclairage à l'aide d'un filtrage gaussien et d'un algorithme de nuances de gris.

14. Appareil de détection de couleur de peau selon la revendication 11, dans lequel l'appareil est également activé pour réaliser :

la génération d'une interface de résultat de détection de peau, dans lequel l'interface de résultat de détection de peau comprend une barre de couleur de peau, et la barre de couleur de peau comprend le code de couleur de peau ; et
la génération d'une interface de détails de couleur de peau en réponse à une instruction de sélection de la barre de couleur de peau, dans lequel l'interface de détails de couleur de peau comprend le code de couleur de peau, la teinte de couleur de peau et une suggestion de soin de peau.

15. Appareil de détection de couleur de peau selon la revendication 11, dans lequel l'appareil est également activé pour réaliser :

avant l'obtention d'une image de visage, la génération d'une interface de détection de peau, dans lequel l'interface de détection de peau comprend des informations sur l'historique de détection de peau et une icône de détection de peau ; et
en réponse à une instruction de sélection de l'icône de détection de peau, l'entrée dans un processus d'obtention de l'image de visage.

| Obtain a face image | 101 |

| Determine a face key point in the face image | 102 |

| Determine a skin color estimation region of interest (Region Of Interest, ROI) and an illumination estimation region of interest ROI in the face image based on the face key point | 103 |

| Obtain a detected skin color value corresponding to the skin color estimation region of interest | 104 |

| Obtain a detected illumination color value corresponding to the illumination estimation region of interest | 105 |

| Use the detected skin color value and the detected illumination color value as feature input of the skin color estimation model, and obtain a corrected skin color value output by a skin color estimation model | 106 |

FIG. 1

FIG. 2

FIG. 3

FIG. 4

FIG. 5

Skin color  Creamy-white

FIG. 6

Skin color

Fair-skinned      Natural      Light brown      Dark

Color
code

White lucent     Creamy-white     Wheat color     Dark brown

Hue     Cold     Middle     Warm

Skin care suggestions: xxx

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110874572 A

**Non-patent literature cited in the description**

- **LEE JAE Y et al.** *An Elliptical Boundary Model for Skin Color Detection*

- **JAIN JHILMIL et al.** *Color match*